# EUROPEAN PATENT APPLICATION

(11) **EP 3 104 013 A1**
(43) Date of publication of application: **14.12.2016**
(21) Application number: 15171881.4
(22) Date of filing: 12.06.2015
(51) Int. Cl.: F04D 17/16, F01P 5/02, F04D 25/08, F04D 29/28, F04D 29/58, H02K 5/20, H02K 9/06, F01P 5/04

(54) **ELECTRIC MACHINE FOR A VEHICLE**

(71) Applicant: Mahle International GmbH, 70376 Stuttgart (DE)
(72) Inventor: BERCE, Mitja, 5270 Ajdovscina (SI); PAHOR-KOS, Vanja, 1370 Logatec (SI); PAVSIC, Darjo, 5212 Dobrovo v Brdih (SI)
(74) Representative: BRP Renaud & Partner mbB Rechtsanwälte Patentanwälte Steuerberater

(57) **Abstract**

The present invention relates to an electric machine (1) for a vehicle, comprising a housing (2), which surrounds an interior (6) and has a jacket (7), a rear side wall (8) and a front side wall (9), a stator (3), a rotor (4), whose rotor shaft (13) is mounted rotatably via a front shaft bearing (14) on the front side wall (9), and a fan impeller (5) for generating a primary cooling air flow (20), which flows in the direction of the front side wall (9) in the interior (6).

A simplified design with efficient cooling results when the fan impeller (5) is connected in rotationally fixed fashion to the rotor shaft (13) outside the interior (6), when the primary cooling air flow (20) exits the interior (6) through the front side wall (9) and enters a suction space (22), which is formed axially between the front side wall (9) and the fan impeller (5) and radially between the rotor shaft (13) and the rotating blades (19), and when the fan impeller (5) has secondary air inlet openings (24), so that said fan impeller generates a secondary cooling air flow (25), which enters the suction space (22) through the secondary air inlet openings (24).

## Description

The present invention relates to an electric machine for a vehicle having the features of the preamble of Claim 1.

Such an electric machine may generally be an electric motor or a generator. It is preferably an alternator of an internal combustion engine, preferably of a vehicle. The vehicle in which such an electric machine is used can be of any kind, but is preferably a road vehicle.

A machine of the generic type is known, for example, from US 5 214 325. It comprises a housing, which surrounds an interior and which has a jacket, which runs peripherally in a circumferential direction of the housing and radially limits the interior, and axially on one side a rear side wall which axially delimits the interior and, axially on the other side, a front side wall, which axially delimits the interior. A stator of the machine is connected fixedly to the jacket. Said jacket can also be denoted as bracket. A rotor of the machine is arranged rotatably in the stator, wherein a rotor shaft of the rotor is mounted rotatably via a front shaft bearing on the front side wall.

Owing to the electrical coils or windings on the stator and/or on the rotor, heat is generated during operation of the electric machine which needs to be dissipated in order to avoid overheating of the machine. For this purpose, the machine is provided with a fan impeller, which is connected in rotationally fixed fashion to the shaft and which has rotating blades, which, on rotation of the rotor, generate a primary cooling air flow which enters the interior through the rear side wall and flows in the direction of the front side wall therein. In particular, the primary cooling air flow flows axially through the stator and/or the rotor.

In the known machine, the fan impeller is arranged in the interior and is fastened on a rotor flange, which for its part is fitted in rotationally fixed fashion on the rotor shaft. The fan impeller has a disc body which has the rotating blades, is impermeable to air, and is fastened on said rotor flange in such a way that it is located axially between the rotor flange and the front side wall. In addition, an interspace is formed axially between the front side wall and the disc body of the fan impeller. The front side wall has secondary air inlet openings, which lead to said interspace. The rotor flange has exit openings, which fluidically connect the interspace to that region of the interior which faces away from the interspace. On rotation of the rotor, the rotating blades generate a secondary cooling air flow, which enters the interspace through the front side wall, flows through the interspace and flows through the rotor flange into that region of the interior which is remote from the interspace. The secondary cooling air flow mixes with the primary cooling air flow in this region of the interior. The two cooling air flows exit from the interior through radial air outlet openings, which are formed in the jacket. The complexity involved in the implementation of such a complex cooling of the machine is comparatively great. In particular, comparatively narrow production tolerances need to be adhered to in order to enable leak-free operation of the fan impeller in the housing.

The present invention is concerned with the problem of specifying an improved embodiment for an electric machine of the type described above which is characterized in particular by an inexpensive design, wherein at the same time efficient cooling of the machine during operation is intended to be enabled.

In accordance with the invention, this problem is solved by the subject matter of the independent claim. Advantageous embodiments are the subject matter of the dependent claims.

The invention is based on the general concept of arranging the fan impeller outside the interior in the region of the front side wall and providing the disc body of the fan impeller with the secondary air inlet openings. The primary cooling air flow is passed out of the interior through the front side wall and conducted into a suction space, which is located axially between the front side wall and the fan impeller and radially between the rotor shaft and the rotating blades. The rotating blades of the fan impeller, on rotation of the rotor, generate a vacuum in the suction space, and this firstly produces the primary cooling air flow which flows through the rear side wall, through the interior and through the front side wall. Secondly, the vacuum prevailing in the suction space produces a secondary cooling air flow, which flows through the secondary air inlet openings into the suction space, mixes with the primary cooling air flow there and, together with the primary cooling air flow, flows largely radially out of the suction space through the rotating blades. Owing to the positioning of the fan impeller outside the housing, the production of the machine with fan impeller is simplified. At the same time, the fan impeller is no longer tied to the dimensions of the housing, with the result that in particular also a larger, more powerful fan impeller can be used. Furthermore, the suction space is likewise located on the outer side of the housing and in addition in the region of the front shaft bearing, as a result of which efficient cooling of the front shaft bearing can be achieved via the secondary cooling air flow. Tests have demonstrated that the temperature of the front shaft bearing can be reduced by at least 10% with the aid of the secondary cooling air flow. The integration of the secondary air inlet openings in the disc body of the fan impeller can be implemented at low cost. In addition, in the case of the machine according to the invention, flow guidance which can be achieved particularly easily results.

The circumferential direction of the housing in the present context relates to the axis of rotation of the rotor. In addition, in the present context the axis of rotation defines an axial direction, so that the axial direction runs parallel to the axis of rotation. In addition, in the present context, a radial direction relates to the axis of rotation, i.e. is perpendicular to the axis of rotation.

In accordance with an advantageous embodiment, the secondary air inlet openings can be arranged radially in the region of the front shaft bearing. This means that the secondary cooling air flow flows in a targeted manner into the suction space in the region of the shaft bearing, as a result of which intensive cooling of the front shaft bearing can be realized with the aid of the secondary cooling air flow.

In another advantageous embodiment, provision can be made for at least one such secondary air inlet opening to be configured as an axial passage, through which the secondary cooling air flow enters substantially axially into the suction space. Expediently, a plurality of and preferably all of the secondary air inlet openings are each in the form of an axial passage. Secondary air inlet openings through which a flow can pass axially can be achieved particularly easily in the disc body, which favours production. The secondary air inlet openings can in principle have any desired geometry. Round cross sections are preferred. Circular or slot-shaped openings are conceivable. Slot-shaped openings can in particular be oriented radially.

In another embodiment, at least one such secondary air inlet opening can be configured as a radial passage, through which the secondary cooling air flow passes substantially radially in order to enter the suction space. By virtue of the fact that the secondary air inlet openings have a radial flow through them, deflection of the secondary cooling air flow through 180° is required in order that the secondary cooling air flow can exit the suction space through the rotating blades again. As a result, the residence time of the secondary cooling air in the region of the fan impeller is extended, which improves the cooling of the front shaft bearing. Preferably, a plurality of and in particular all of the secondary air inlet openings are each configured as such a radial passage.

In another embodiment, at least one such secondary cooling air inlet opening can be configured as a circumferential passage, through which the secondary cooling air flow passes substantially in the circumferential direction. Particularly advantageous here is a development in which the respective secondary air inlet opening configured as a circumferential passage is oriented in a direction of rotation of the rotor such that the secondary cooling air flow passes through the respective secondary air inlet opening in the opposite direction to the direction of rotation and ultimately enters the suction space. Owing to the rotation of the fan impeller, a relative speed between the fan impeller and the air which is located on a side of the fan impeller which is remote from the suction space is produced. This relative speed drives this external air in addition to the vacuum of the suction space, which assists in the formation of the secondary cooling air flow.

Preferably, all of the secondary air inlet openings are configured either as an axial passage or as a radial passage or as a circumferential passage. In principle, however, embodiments are also conceivable in which two of the abovementioned passage types or all three passage types are realized at the same time, with the result that the disc body can have secondary air inlet openings configured as an axial passage and/or secondary air inlet openings configured as a radial passage and/or secondary air inlet openings configured as a circumferential passage.

In accordance with another advantageous embodiment, a guide blade can be provided on the disc body at least at one such secondary cooling air inlet opening. Said guide blade assisting in the formation of the secondary cooling air flow on rotation of the rotor. In particular, such guide blades can have a type of conveying function since the conveying blades permanently convey air through the respective secondary air inlet opening when the fan impeller is rotating owing to the relative speed with respect to the air which is present axially externally at the fan impeller.

In accordance with an expedient development, the respective guide blade can be formed integrally on the disc body. For example, the fan impeller can be designed as a sheet-metal moulding, on which the rotating blades are formed by forming. The guide blades can then likewise be formed on the disc body by forming.

In accordance with another advantageous development, the respective guide blades can form part of an opening ring of the respective secondary air inlet opening. Another part of the opening ring or the remainder of the opening ring is then expediently formed by the disc body. Thus, owing to the formation of the guide blades on the disc body, at the same time the respectively associated secondary air inlet opening can be formed. As a result, the fan impeller with the guide blades and the secondary air inlet openings can be produced at particularly low cost.

In accordance with another advantageous embodiment, provision can be made for the respective guide blades to protrude axially and/or radially from the disc body on an outer side of the fan impeller which is turned away from the suction space and/or on an inner side of the fan impeller which is turned towards the suction space. In particular by virtue of this measure, the above-described conveying effect of the respective guide blades can be produced or improved.

In another embodiment, the disc body can have a radially inner, disc-shaped inner ring body, which is connected in rotationally fixed fashion to the rotor shaft, and a radially outer, disc-shaped outer ring body, which has the rotating blades and is connected fixedly to the inner ring body via a conical or cylindrical intermediate ring body. Preferably, the rotating blades, the inner ring body, the intermediate ring body and the outer ring body are formed integrally on the disc body. In particular, the fan impeller is a sheet-metal moulding produced from a single piece of sheet metal.

The secondary air inlet openings configured as an axial passage and the secondary air inlet openings configured as a circumferential passage can be realized particularly easily on the outer ring body. The secondary air inlet openings configured as a radial passage can be realized particularly easily on the intermediate ring body.

Particularly advantageous is a development in which a ring space is formed radially between the rotor shaft and the intermediate ring body, through which ring space the secondary cooling air flow passes to the respective secondary air inlet opening. By virtue of this design, the associated secondary air inlet openings formed in the intermediate ring body are located close to the rotor shaft, i.e. as far inwards as possible on the fan impeller in the radial direction. As a result, the secondary cooling air flow can be applied to quasi the entire front shaft bearing, which provides particularly efficient cooling for the front shaft bearing.

In another advantageous embodiment, the outer ring body can be arranged offset axially towards the outside with respect to the inner ring body. In other words, the outer ring body is axially further removed from the stator than the inner ring body. As a result, firstly a design of the rotor which is as compact as possible and secondly a relatively large-volume suction space are realized.

In another embodiment, an inner ring gap can be formed axially between the outer ring body and the front side wall, through which ring gap the secondary cooling air flow flows to the suction space. In this way, the secondary cooling air flow acts directly on the front side wall, in particular in a region accommodating the front shaft bearing, before said secondary cooling air flow passes into the suction space. This results in particularly efficient cooling for the front shaft bearing.

In another advantageous embodiment, an outer ring gap can be formed axially between the outer ring body and a drive element, which is connected in rotationally fixed fashion to the rotor shaft, with the secondary cooling air flow passing through said outer ring gap to the abovementioned ring space, which is formed radially between the rotor shaft and the intermediate ring body. As a result, complex flow guidance for the secondary cooling air flow can be realized using simple means. The short distance from the axis of rotation in this case also has the advantage that only relatively low circumferential speeds of the fan impeller prevail there, with the result that comparatively low flow losses occur. The abovementioned drive element can be incorporated in a belt drive or a chain drive of the drive train of the vehicle, for example, in order to transfer drive forces for driving the rotor onto the machine or in order to transfer drive forces of the rotor from the machine onto the drive train.

In another advantageous embodiment, the front side wall can have an axial depression or even an axial through-opening, preferably in the region of the front shaft bearing, with the inner ring body engaging axially in said depression or opening. As a result, the inner ring body is located close to the front shaft bearing or forms an axial cover of the front shaft bearing. The secondary cooling air flow acts on and cools the inner ring body, which results in efficient cooling of the front shaft bearing. In addition, this design results in a particularly compact design of the rotor in the axial direction.

Further important features and advantages of the invention result from the dependent claims, the drawings and the associated description of the figures with reference to the drawings.

It goes without saying that the features mentioned above and yet to be explained below can be used not only in the respectively cited combination, but also in other combinations or on their own without departing from the scope of the present invention.

Preferred exemplary embodiments of the invention are illustrated in the drawings and will be explained in more detail in the description below, wherein the same reference symbols relate to identical or similar or functionally identical components.

In the figures, in each case schematically,
- Figure 1: shows a simplified, isometric longitudinal section through an electric machine in accordance with a first embodiment,
- Figure 2: shows an isometric view of a fan impeller of the machine shown in Figure 1,
- Figure 3: shows an isometric longitudinal section through the machine in accordance with a second embodiment,
- Figure 4: shows an isometric view of the fan impeller of the machine shown in Figure 3,
- Figure 5: shows an isometric longitudinal section through the machine in accordance with a third embodiment,
- Figure 6: shows an isometric view of the fan impeller of the machine shown in Figure 5,
- Figure 7: shows an isometric view of the fan impeller as in Figure 4, but for a further embodiment,
- Figure 8: shows an isometric view of the fan impeller as in Figure 6, but for a further embodiment.

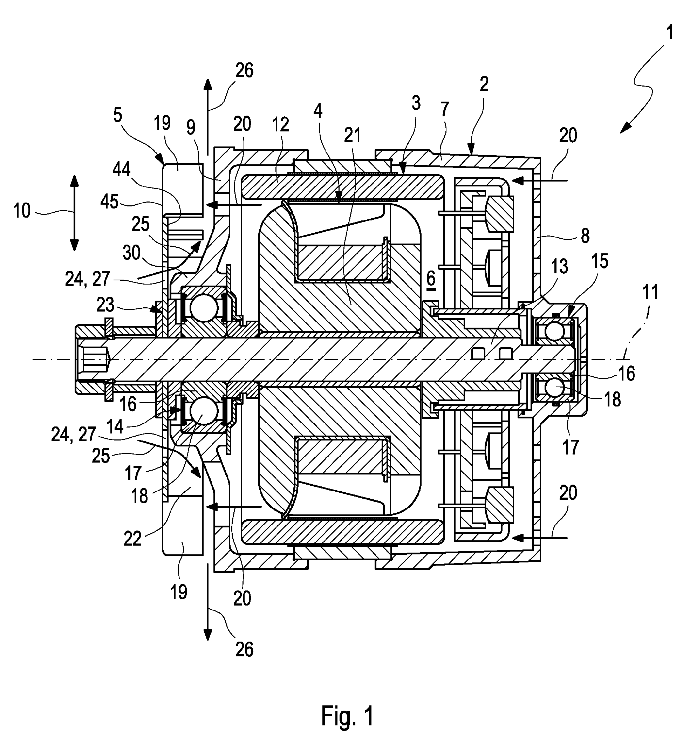

As shown in Figures 1, 3 and 5, an electric machine 1, which may be a generator and/or an electric motor, in particular an alternator, comprises a housing 2, a stator 3, a rotor 4 and a fan impeller 5. The machine 1 is dimensioned such that it can be used in a vehicle and preferably in a road vehicle.

The housing 2 surrounds an interior 6 and has a jacket 7, a rear side wall 8 and a front side wall 9. The jacket 7 runs in a circumferential direction 10, which relates to an axis of rotation 11 of the rotor 4, around the interior 6, and delimits said interior radially, wherein the radial direction likewise relates to the axis of rotation 11. The rear side wall 8 delimits the interior 6 axially on one side, while the front side wall 9 delimits the interior 6 axially on the other side. The stator 3 is fixedly connected to the jacket 2 and generally has at least one stator winding 12. The rotor 4 has a rotor shaft 13 and is arranged in the stator 3. The machine 1 shown here is thus a so-called internal-rotor machine. The rotor 4 also bears at least one rotor winding 21, which is connected in rotationally fixed fashion to the rotor shaft 13.

The rotor shaft 13 is mounted rotatably about the axis of rotation 11 on the housing 2 in a front shaft bearing 14 and in a rear shaft bearing 15. The front shaft bearing 14 is arranged on or in the front side wall 9. The rear shaft bearing 15 is arranged on or in the rear side wall 8. The two shaft bearings 14, 15 are in this case designed as rolling-element bearings and in particular as ball bearings. They each have an inner bearing ring 16 and an outer bearing ring 17, between which rolling elements 18, i.e. in particular balls, run.

The fan impeller 5 is connected in rotationally fixed fashion to the rotor shaft 13 and has rotating blades 19. During operation of the machine 1, the fan impeller 5 rotates along with the rotor shaft 13. In this case, the rotating blades 19 generate a primary cooling air flow 20, which is indicated by arrows in Figures 1, 3 and 5. The primary cooling air flow 20 passes through the rear side wall 8 into the interior 6, flows through the stator 3 and the rotor 4 substantially axially in the interior 6 and exits from the interior 6 again through the front side wall 9.

The fan impeller 5 is connected in rotationally fixed fashion to the rotor shaft 13 outside the interior 6 and therefore outside the housing 2. The fan impeller 5 is thus arranged axially adjacent to the front side wall 9 outside the housing 2. A suction space 22 is formed axially between the front side wall 9 and the fan impeller 5 and is arranged radially between the rotor shaft 13 and the rotating blades 19. The primary cooling air flow 20 enters this suction space 22 when it exits from the interior 6 through the front side wall 9. The fan impeller 5 has a disc body 23, which has the rotating blades 19 radially on the outside and which is connected in rotationally fixed fashion to the rotor shaft 13. In addition, this disc body 23 is equipped with a plurality of secondary air inlet openings 24. Said openings are located in the region of the suction space 22. Owing to the rotation of the rotating blades 19, a vacuum is produced in the suction space 22, which vacuum firstly produces the primary cooling air flow 20 and secondly produces a secondary cooling airflow 25, which is likewise indicated by arrows in Figures 1, 3 and 5. Correspondingly, the secondary cooling air flow 25 enters the suction space 22 through the secondary cooling air inlet openings 24. A cooling air flow 26 exits substantially radially from the suction space 22 through the rotating blades 19, which is likewise indicated by arrows in Figures 1, 3 and 5. This cooling air flow 26 is in this case the sum of the primary cooling air flow 20 and the secondary cooling air flow 25.

As shown in Figures 1, 3 and 5, the secondary air inlet openings 24 are arranged radially substantially in the region of the front shaft bearing 14. Correspondingly, the secondary cooling air flow 25 is used predominantly for cooling the front shaft bearing 14.

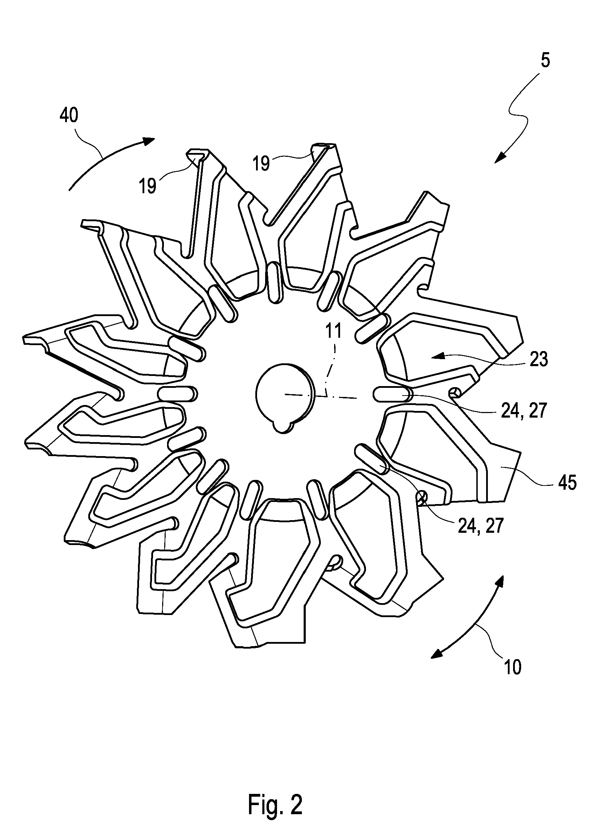

In the first embodiment shown in Figures 1 and 2, all of the secondary air inlet openings 24 are each in the form of an axial passage 27, through which the secondary cooling air flow 25 passes axially in order to pass into the suction space 22.

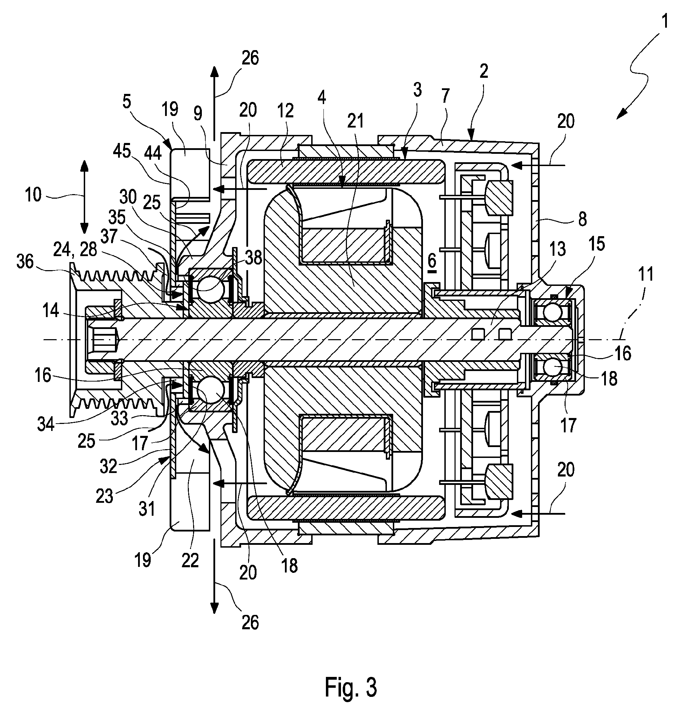

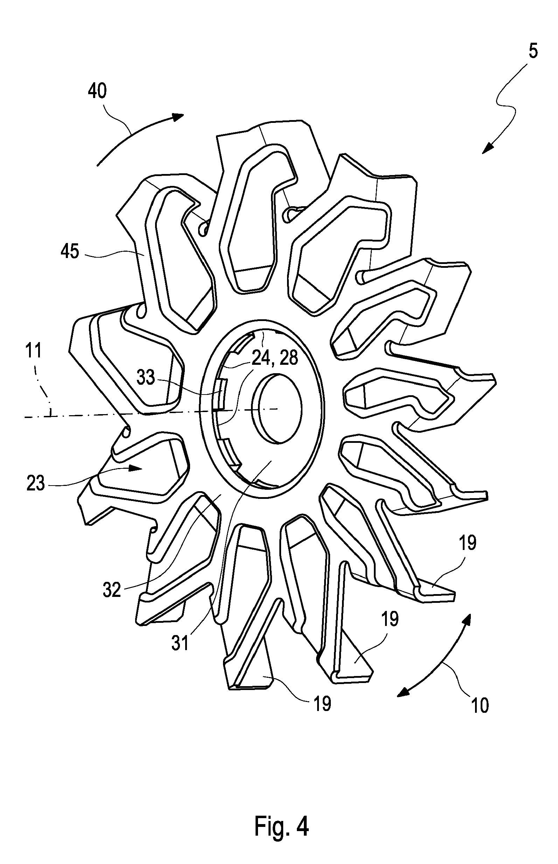

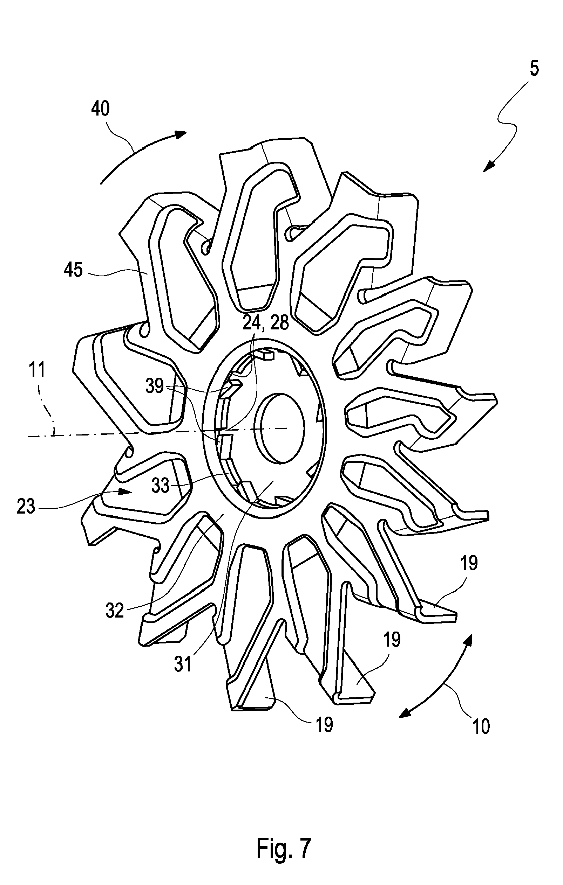

In the second embodiment shown in Figures 3 and 4 and in the fourth embodiment shown in Figure 7, which forms a variant of the second embodiment, all of the secondary air inlet openings 24 are each in the form of a radial passage 28, through which the secondary cooling air flow 25 passes radially in order to ultimately pass to the suction space 22.

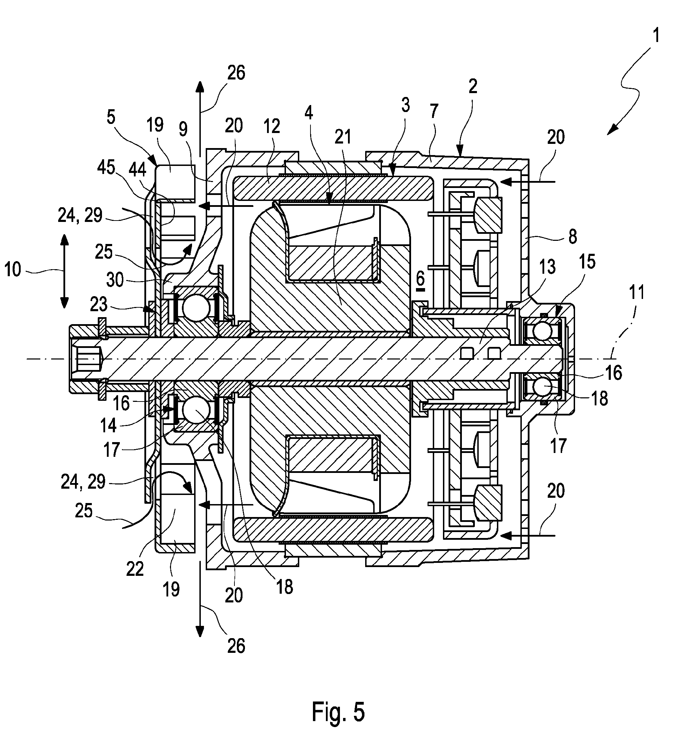

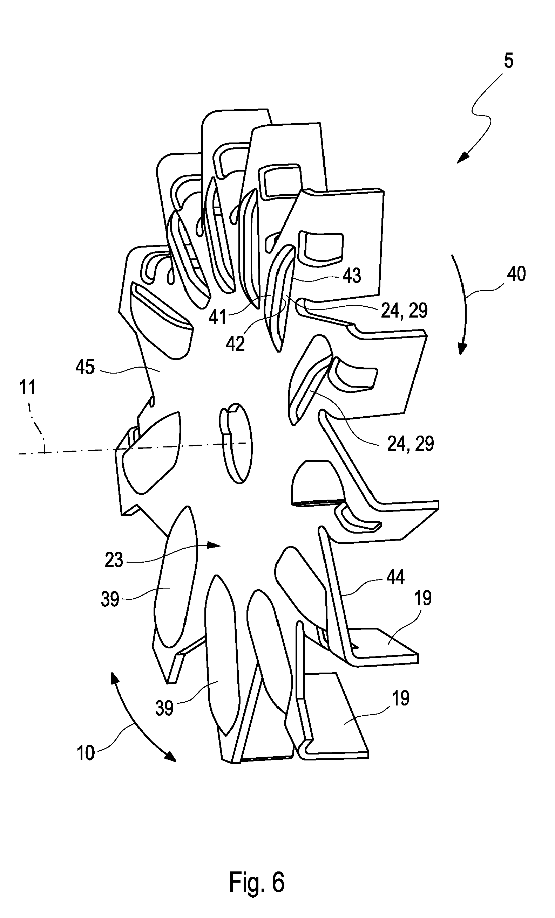

In the third embodiment shown in Figures 5 and 6, all of the secondary air inlet openings 24 are each in the form of a circumferential passage 29, through which the secondary cooling flow 25 passes in the circumferential direction 10 in order to pass into the suction space 22.

In the first embodiment shown in Figures 1 and 2, the secondary air inlet openings 24 in the form of an axial passage 27 are each configured as a slot, which is oriented radially with respect to the axis of rotation 11. The radial positioning of the secondary air inlet openings 24 is in this case selected such that the secondary cooling air flow 25 enters the suction space 22 at the radially inner end of the suction space 22. Precisely there there is an edging 30 formed on the front side wall 9 for the front shaft bearing 14.

In the second embodiment shown in Figures 3 and 4 and in the fourth embodiment shown in Figure 7, the disc body 23 has a radially inner, disc-shaped inner ring body 31, a radially outer, disc-shaped outer ring body 32 and a conical or cylindrical intermediate ring body 33. The inner ring body 31 is connected in rotationally fixed fashion to the rotor shaft 13. The outer ring body 32 has the rotating blades 19. The intermediate ring body 33 connects the inner ring body 31 to the outer ring body 32. In addition, in this embodiment, the secondary air inlet openings 24 in the form of a radial passage 28 are formed on this intermediate ring body 33. The intermediate ring body 33 is thus interrupted a plurality of times in the circumferential direction 10 by the individual secondary air inlet openings 24 and is thus formed quasi by a plurality of webs (not provided with a designation), which are arranged in the circumferential direction 10 in each case between two adjacent secondary air inlet openings 24.

As can be seen from Figure 3, in the assembled state of the machine 1, a ring space 34 is formed radially between the intermediate ring body 33 and the rotor shaft 13 and surrounds the rotor shaft 13 in the circumferential direction 10. The secondary cooling air flow 25 flows through this ring space 34 in order to arrive at the secondary air inlet openings 24. The fan impeller 5 is attached to the rotor shaft 13 in such a way that the outer ring body 32 is arranged so as to be offset radially outwards with respect to the inner ring body 31. In this case, a side facing the front side wall 9 of the fan impeller 5 forms an inner side 44 of the fan impeller 5, while a side of the fan impeller 5 which is turned away from the front side wall 9 defines an outer side 45 of the fan impeller 5. In the example, the rotating blades 19 are formed by virtue of the fact that radially outer end sections of the disc body 23 or of the outer ring body 32 are bent back in the axial direction from the disc body 23. Correspondingly, the rotating blades 19 protrude inwards from the disc body 23.

An inner ring gap 35 is formed axially between the outer ring body 32 and the front side wall 9 or the abovementioned edging 30, through which inner ring gap the secondary cooling air flow 25 can flow from the ring space 34 to the suction space 22. This results in improved inflow of the front side wall 9 in the region of the front shaft bearing 14, which assists cooling thereof.

Furthermore, as shown in Figure 3, a drive element 36 is fitted in rotationally fixed fashion on the rotor shaft 13 on the outer side 45 of the fan impeller 5 which is remote from the front side wall 9. The machine 1 or the rotor 4 can be incorporated in a drive train of the vehicle provided with the machine 1 via this drive element 36, for example in the belt drive or in a chain drive. In the example shown, the drive element 36 is in the form of a pulley, with the result that it can be drive-coupled to a belt. For example, the machine 1 can be operated as a generator or alternator via the drive element 36 in order to draw power or can be operated as a motor in order to output power. In any case, an outer ring gap 37 is formed axially between the outer ring body 32 and this drive element 36, with it being possible for the secondary cooling air flow 25 to flow into the ring space 34 through said outer ring gap.

Furthermore, Figure 3 shows a particular embodiment, in which the front side wall 9 has a depression 38 or an opening 38 in the region of the inner ring body 31, with the inner ring body 31 protruding axially into said depression or opening. In the example shown in Figure 3, the depression 38 passes through the entire wall thickness of the front side wall 9, with the result that it is an opening 38, in the example shown in Figure 3. It is notable that said depression 38 or opening 38 is provided within the edging 30 of the front shaft bearing 14 so that, in this example, the front shaft bearing is delimited or shielded axially by the inner ring body 31. As a result, particularly efficient cooling of the front shaft bearing 14 can take place. This is because, in the embodiment shown here, the inner ring body 31 is cooled directly owing to the special course of the secondary cooling air flow 25 or owing to the flow path thus formed for the secondary cooling air flow 25, as a result of which a comparatively large amount of heat can be dissipated from the front shaft bearing 14.

In the third embodiment shown in Figures 5 and 6, a guide blade 39 is provided for each secondary air inlet opening 24 in the form of a circumferential passage 29, said guide blade 39 being formed on the disc body 23 for this purpose. The guide blades 39 are in this case shaped and arranged in such a way that they assist in the formation of the secondary cooling air flow 25 on rotation of the rotor 4. A direction of rotation 40 of the rotor 4 and therefore of the fan impeller 5 is indicated by an arrow in Figures 2, 4, 6, 7 and 8. The guide blades 39 protrude axially from the disc body 23 on that outer side 45 of the fan impeller 5 which is turned away from the suction space 22. Therefore, each guide blade 39 provides a protrusion on the outer side 45, in which the respective inlet opening 24 is arranged. In said protrusion the inlet opening 24 is arranged at the upstream end of the guide blade 39. This third embodiment may need additional axial space between the fan impeller 5 and the drive element 36. Preferably, said guide blades 39 are expediently formed integrally on the disc body 23. In addition, the guide blades 39 each form part 41 of an opening rim 42 of the respective secondary air inlet opening 24, while a remainder 43 of the opening rim 42 is formed by the disc body 23. The secondary air inlet openings 24 provided with the guide blades 39 and formed therewith are arranged radially further on the outside than the axially oriented secondary air inlet openings 24 shown in the first embodiment shown in Figures 1 and 2. Nevertheless, said secondary air inlet openings 24, with the aid of the guide blades 39, effect a secondary cooling air flow 25 directed to the edging 30. In particular, the secondary air inlet openings 24 in the form of a circumferential passage 29 are oriented in the previously mentioned direction of rotation 40. This results in the secondary cooling air flow 25 passing through the respective secondary air inlet opening 24 and entering the suction space 22 in the direction opposite the direction of rotation 40 when the fan impeller 5 is rotating.

The fourth embodiment shown in Figure 7 differs from the second embodiment shown in Figures 3 and 4 only in that in each case the respective guide blade 39 is likewise assigned to the secondary air inlet openings 24 in the form of a radial passage 28. In this case, the guide blades 39 protrude radially from the disc body 23, in this case from the intermediate ring body 33, to be precise inwards such that they protrude into the ring space 34 in the fitted state. This results in a blade effect or a conveying function on rotation of the fan impeller 5 as well, which assists in the suction of the secondary cooling air flow 25. In this case too, the guide blades 39 are formed integrally on the disc body 23.

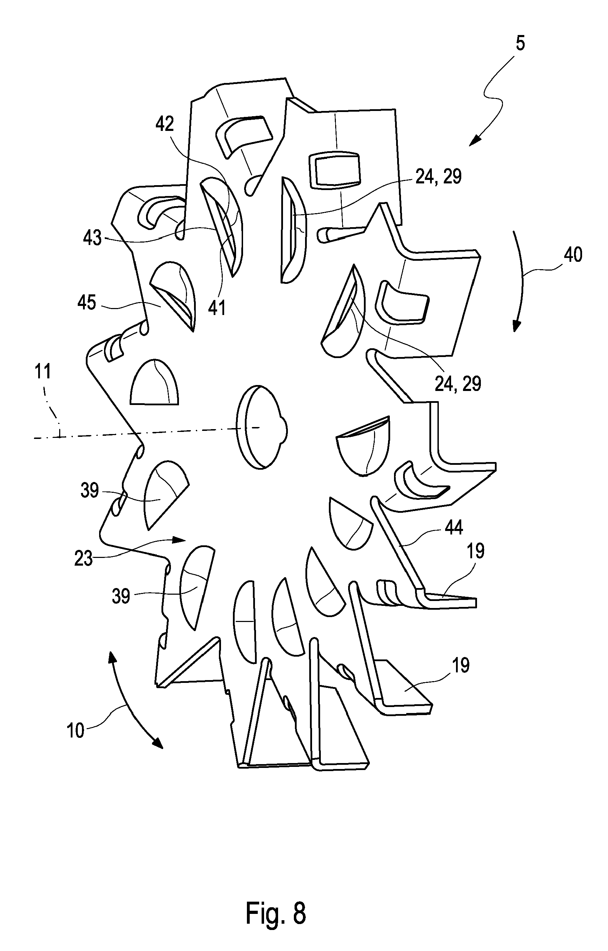

The fifth embodiment shown in Fig. 8 differs from the third embodiment shown in Figures 5 and 6 only in that in each case the respective guide blade 39 is protruding from the disc body 23 not on the outer side 45 of the fan impeller 5 but on the inner side 44 of the fan impeller 5, said inner side 44 turned towards the suction space 22. Therefore, each guide blade 39 provides a recess on the outer side 45, in which the respective inlet opening 24 is arranged. In said recess the inlet opening 24 is arranged at the downstream end of the guide blade 39. This fifth embodiment doesn't need additional axial space between the fan impeller 5 and the drive element 36. Also in this fifth embodiment the guide blades 39 are expediently formed integrally on the disc body 23. Also in this case, the guide blades 39 each form part 41 of an opening rim 42 of the respective secondary air inlet opening 24, while a remainder 43 of the opening rim 42 is formed by the disc body 23. The secondary air inlet openings 24 provided with the guide blades 39 and formed therewith are arranged radially further on the outside than the axially oriented secondary air inlet openings 24 shown in the first embodiment shown in Figures 1 and 2. Nevertheless, said secondary air inlet openings 24, with the aid of the guide blades 39, effect a secondary cooling air flow 25 directed to the edging 30. In particular, the secondary air inlet openings 24 in the form of a circumferential passage 29 are oriented in the previously mentioned direction of rotation 40. This results in the secondary cooling air flow 25 passing through the respective secondary air inlet opening 24 and entering the suction space 22 in the direction opposite the direction of rotation 40 when the fan impeller 5 is rotating.

Also a combination of the third and fifth embodiment of Figures 5, 6 and 8 is possible. Then at least one inlet opening 24 can be provided with two guide blades 39. The first guide blade 39 provides a protrusion like in the third embodiment of Figures 5 and 6 and the second guide blade 39 provides a recess like in the fifth embodiment of Figure 8. The inlet opening 24 is then arranged circumferentially between the two guide blades 39. The rim 42 of the respective inlet opening 24 is formed by a part 41 of the first guide blade 39 and the rest of the rim 42 is formed by a part 41 of the second guide blade 39.

In all of the embodiments shown, the fan impeller 5 is preferably a sheet-metal moulding, which is produced by forming from a single piece of sheet metal. Alternatively, the fan impeller 5 can be formed by integrating several separate parts. The separate parts can be fixed together by usual fixing methods like welding, riveting and so on. Also casting or molding, in particular die casting, of the fan impeller 5 or parts thereof is possible.

Summarized for simplicity and in particular independently of the above-described specific embodiments, the present invention relates to an electric machine 1 for a vehicle, comprising a housing 2, which surrounds an interior 6 and which has a jacket 7, a rear side wall 8 and a front side wall 9, a stator 3, a rotor 4, whose rotor shaft 13 is mounted rotatably via a front shaft bearing 14 on the front side wall 9, a fan impeller 5 for generating a primary cooling air flow 20 which flows in the interior 6 in the direction of the front side wall 9, wherein the fan impeller 5 is connected in rotationally fixed fashion to the rotor shaft 13 outside the interior 6, wherein the primary cooling air flow 20 exits from the interior 6 through the front side wall 9 and enters a suction space 22, which is formed axially between the front side wall 9 and the fan impeller 5 and radially between the rotor shaft 13 and the rotating blades 19, wherein the fan impeller 5 has secondary air inlet openings 24, with the result that it generates a secondary cooling air flow 25, which enters the suction space 22 through the secondary air inlet openings 24.

## Claims

1. Electric machine for a vehicle, comprising
- a housing (2), which surrounds an interior (6) and which has a jacket (7), which runs peripherally in a circumferential direction (10) of the housing (2) and radially limits the interior (6), and axially on one side a rear side wall (8) which axially delimits the interior (6) and, axially on the other side, a front side wall (9), which axially delimits the interior (6),
- a stator (3), which is connected fixedly to the jacket (7),
- a rotor (4), which is arranged in the stator (3) and whose rotor shaft (13) is mounted rotatably via a front shaft bearing (14) on the front side wall (9),
- a fan impeller (5), which is connected in rotationally fixed fashion to the rotor shaft (13) and which has rotating blades (19), which, on rotation of the rotor (13), generate a primary cooling air flow (20), which flows in the direction of the front side wall (9) in the interior (6),
**characterized in**
- **that** the fan impeller (5) is connected in rotationally fixed fashion to the rotor shaft (13) outside the interior (6),
- **that** the primary cooling air flow (20) exits the interior (6) through the front side wall (9) and enters a suction space (22), which is formed axially between the front side wall (9) and the fan impeller (5) and radially between the rotor shaft (13) and the rotating blades (19),
- **that** the fan impeller (5) has a disc body (23), which has the rotating blades (19), is connected in rotationally fixed fashion to the rotor shaft (13) and has secondary air inlet openings (24),
- **that** the rotating blades (19), on rotation of the rotor (4), generate a secondary cooling air flow (25), which enters the suction space (22) through the secondary air inlet openings (24).

2. Machine according to Claim 1,
**characterized in**
**that** the secondary air inlet openings (24) are arranged radially in the region of the front shaft bearing (14).

3. Machine according to Claim 1 or 2,
**characterized in**
**that** at least one such secondary air inlet opening (24) or a plurality of or all of the secondary air inlet openings (24) are each in the form of an axial passage (27), through which the secondary cooling air flow (25) passes axially.

4. Machine according to one of Claims 1 to 3,
**characterized in**
**that** at least one such secondary air inlet opening (24) or a plurality of or all of the secondary air inlet openings (24) are each in the form of a radial passage (28), through which the secondary cooling air flow (25) passes radially.

5. Machine according to one of Claims 1 to 4,
**characterized in**
**that** at least one such secondary air inlet opening (24) or a plurality of or all of the secondary air inlet openings (24) are each in the form of a circumferential passage (29), through which the secondary cooling air flow (25) passes in the circumferential direction (10).

6. Machine according to Claim 5,
**characterized in**
**that** the respective secondary air inlet opening (24) in the form of a circumferential passage (29) is oriented in a direction of rotation (40) of the rotor (4), so that the secondary cooling air flow (25) passes through the respective secondary air inlet opening (24) in the opposite direction to the direction of rotation (40).

7. Machine according to one of Claims 1 to 6,
**characterized in**
**that** at least at one of such a secondary air inlet opening (24) or at a plurality of or at all of the secondary air inlet openings (24) a guide blade (39) is provided on the disc body (23).

8. Machine according to Claim 7,
**characterized in**
**that** the respective guide blade (39) forms part (41) of an opening rim (42) of the respective secondary air inlet opening (24).

9. Machine according to Claim 7 or 8,
**characterized in**
- **that** the respective guide blade (39) protrudes axially from the disc body (23) on an outer side (45) of the fan impeller (5), said outer side being turned away from the suction space (22), and/or
- **that** the respective guide blade (39) protrudes axially from the sic body (23) on an inner side (44) of the fan impeller (5), said inner side (44) being turned towards the suction space (22), and/or
- **that** the respective guide blade (39) protrudes radially from the disc body (23) on an outer side (45) of the impeller wheel (5), said outer side being remote from the suction space (22).

10. Machine according to one of Claims 1 to 9,
**characterized in**
**that** the disc body (23) has a radially inner, disc-shaped inner ring body (31), which is connected in rotationally fixed fashion to the rotor shaft (13), and a radially outer, disc-shaped outer ring body (32), which has the rotating blades (19) and is connected fixedly to the inner ring body (31) via a conical or cylindrical intermediate ring body (33).

11. Machine according to Claims 4 and 10,
**characterized in**
**that** the respective secondary air inlet opening (24) in the form of a radial passage (28) is formed on the intermediate ring body (33).

12. Machine according to Claim 10 or 11,
**characterized in**
**that** a ring space (34) is formed radially between the rotor shaft (13) and the intermediate ring body (33), through which ring space the secondary cooling air flow (25) passes to the respective secondary air inlet opening (24).

13. Machine according to one of Claims 10 to 12,
**characterized in**
**that** an inner ring gap (35) is formed axially between the outer ring body (32) and the front side wall (9), with the secondary cooling air flow (25) flowing through said inner ring gap to the suction space (22).

14. Machine according to one of Claims 10 to 13,
**characterized in**
**that** an outer ring gap (37) is formed axially between the outer ring body (32) and a drive element (36), which is connected in rotationally fixed fashion to the rotor shaft (13), with the secondary cooling air flow (25) flowing through said outer ring gap.

15. Machine according to one of Claims 10 to 14,
**characterized in**
**that** the front side wall (9) has a depression or an opening (38), into which the inner ring body (31) protrudes axially.
